# EUROPÄISCHE PATENTSCHRIFT

(11) **EP 2 611 593 B1**
(45) Veröffentlichungstag und Bekanntmachung des Hinweises auf die Patenterteilung: **05.09.2018**
(21) Anmeldenummer: 11735800.2
(22) Anmeldetag: 20.07.2011
(51) Int. Cl.: B29C 49/78, B29C 49/42, B65G 29/00, B41J 3/407

(54) **VERFAHREN ZUM HERSTELLEN UND BEHANDELN VON BEHÄLTERN**
METHOD FOR PRODUCING AND TREATING CONTAINERS
PROCÉDÉ POUR PRODUIRE ET TRAITER DES RÉCIPIENTS

(30) Priorität: 31.08.2010 DE 102010036028
(43) Veröffentlichungstag der Anmeldung: 10.07.2013
(73) Patentinhaber: KHS GmbH, 44143 Dortmund (DE)
(72) Erfinder: PRECKEL, Katrin, 45892 Gelsenkirchen (DE); SCHACH, Martin, 44799 Bochum (DE); REINIGER, Markus, 41238 Mönchengladbach (DE)
(86) Internationale Anmeldenummer: PCT/EP2011/003627
(87) Internationale Veröffentlichungsnummer: WO 2012/028225

(56) Entgegenhaltungen:
- EP-A1- 1 279 477
- EP-A1- 1 806 233
- EP-A2- 0 835 736
- EP-A2- 2 098 355
- EP-B1- 0 958 124
- DE-A1- 3 414 268
- DE-T2- 60 004 894
- JP-A- 7 227 902
- JP-A- 2000 202 899
- US-A- 5 259 716
- US-A- 5 756 018

## Beschreibung

Die Erfindung bezieht sich auf ein Verfahren gemäß Patentanspruch 1. "Behälter" sind im Sinne der Offenbarung insbesondere Dosen, Flaschen, Tuben, Pouches aus Metall, Glas und/oder Kunststoff, aber auch andere Packmittel, die zum Abfüllen von flüssigen oder viskosen Produkten für ein Druckfüllen oder für ein druckloses Füllen geeignet sind.

Unter "Bedrucken" ist im Sinne der Offenbarung ganz allgemein das Aufbringen eines oder mehrerer Druckbilder oder Aufdrucke, insbesondere auch mehrfarbiger Druckbilder oder Aufdrucke auf die jeweilige Behälteraußenfläche zu verstehen, und zwar unabhängig von speziellen Druckverfahren. Bevorzugt erfolgt das Bedrucken unter Verwendung von dem Fachmann bekannten, nach dem Inkjet-Verfahren arbeitenden Druckköpfen, die auch in der DE 10 2006 001 223 A1 beschrieben sind. Die Druckfarben oder Drucktinten werden dabei jeweils als feine Tröpfchen nebeneinander und einander auch teilweise überlappend aufgebracht, sodass sich insgesamt ein Mehrfarben-Druckbild ergibt, und zwar nach dem Trocknen oder Aushärten der Druckfarben in Form einer von dem Druckblld oder Aufdruck gebildeten Farb- oder Druckschicht. Für das Bedrucken der Behälter werden z.B. Druckfarben verwendet, die durch Energieeintrag, d.h. durch Wärme und/oder UV-Strahlung und/oder Mikrowellen-Strahlung und/oder Beta-Strahlung getrocknet bzw. ausgehärtet werden, vorzugsweise durch Vernetzen.
Die Druckschrift EP 1 279 477 A1 offenbart eine Vorrichtung und ein Verfahren zum Blasformen eines Behälters. Dabei wird ein Vorformling in einer Vorformling-Station hergestellt, beispielsweise durch Spritzgießen, und anschließend an eine Blasstation übergeben, in der der Vorformling in einen Behälter einer gewünschten Behälterform umgeformt wird. Vor dem Blasvorgang erfolgt ein Ausrichten des Vorformlings gemäß einer an diesem vorgesehenen Markierung, um den Vorformling in einer gewünschten Ausrichtung in die Blasform einzubringen. Der Vorformling weist nämlich unterschiedliche Wandungsdicken entlang seines Umfangs auf, um beim Herstellen eines ovalen Behälters eine konstante Behälterwandungsdicke zu erhalten.

Die Druckschrift JP 2000 202899 A offenbart ebenfalls eine Vorrichtung zum Blasformen eines Behälters.

Unter "Gestaltungsmerkmal" ist im Sinne der Offenbarung ganz allgemein ein in der Formgebung markanter Behälterbereich oder -abschnitt zumindest an der Behälteraußenseite zu verstehen, beispielsweise, aber nicht ausschließlich eine Einprägung (Embossing) in der Behälterwandung, eine bei der Herstellung des Behälters durch eine Blasform erzeugte Naht usw.

Der Ausdruck "im Wesentlichen" bedeutet im Sinne der Offenbarung Abweichungen von jeweils exakten Wert um +/- 10%, bevorzugt um +/- 5% und/oder Abweichungen in Form von für die Funktion unbedeutenden Änderungen.

Bekannt ist, die zum Streck- oder Blasformen der Behälter aus Kunststoff dienende Streck- oder Blasformmaschine mit einer Behandlungsstation oder Behandlungsstrecke, insbesondere zum unmittelbaren Bedrucken, vorzugsweise zum digitalen Bedrucken der hergestellten Behälter so zu verblocken, dass die Behandlungsstation oder Behandlungsstrecke unmittelbar an den Behälterauslauf der Streckform- oder Blasformmaschine anschließt.
Aufgabe der Erfindung ist es, ein Verfahren aufzuzeigen, welches es ermöglicht, Behälter aus Kunststoff durch Blasformen und mit einem durch Bedrucken der jeweiligen Behälteraußenfläche erzeugten Aufdruck oder Druckbild mit optimaler Qualität und in optisch ansprechender Form herzustellen. Zur Lösung dieser Aufgabe ist ein Verfahren entsprechend dem Patentanspruch 1 ausgebildet.
Die die wenigstens eine Behandlungsstation aufweisende Behandlungsstrecke schließt bei einer bevorzugten Ausführungsform unmittelbar an die Streckform- oder Blasformmaschine bzw. an deren Behälterauslass an, sodass zusätzlich zu den generellen Vorteilen einer Verblockung, wie z.B. kompakte Bauweise, Vereinfachung der Antriebe und Maschinensteuerung, Reduzierung der Anzahl von Behälter-Transporteure usw., ein hoher Reinheitsgrad der Flaschenoberfläche gewährleistet ist, der (Reinheitsgrad) wesentlich die Qualität des Aufdrucks bzw. des Druckbildes bestimmt. Weiterhin wird erreicht, dass die Behälterwandung des jeweiligen Behälters, der durch Blasformen aus einem vorerhitzten Vorformling hergestellt wurde, während der Behandlung, d.h. insbesondere während des Bedruckens noch eine erhöhte Temperatur aufweist, was z.B. bei Verwendung von Druckfarben oder Drucktinten oder Primern auf Wasserbasis sich vorteilhaft auf die gezielte Antrocknung der Tropfen beim Auftreffen auf dem Substrat auswirkt, eine höhere Auflösungen kann auf diese Weise generiert werden. Weiterhin wird das Trocknen oder Aushärten der jeweiligen Druckfarbe oder des Primers beschleunigt.
Die Besonderheit der Erfindung besteht aber darin, dass bereits vor dem Streck- oder Blasformen des jeweiligen Behälters dessen Winkelposition oder die Winkelposition eines interessierenden Gestaltungsmerkmals des Behälters erfasst bzw. festgelegt wird und diese Position bzw. die dieser Position entsprechenden Positionsdaten an die Behandlungsstrecke oder an die dortige wenigstens eine Behandlungsstation weitergegeben und/oder dort genutzt werden, und zwar für ein gesteuertes Ausrichten des jeweiligen Behälters bei der Behandlung bzw. beim Bedrucken und/oder, erfindungsgemäß für ein gesteuertes Einleiten des Behandlungsvorgangs (bzw. Druckvorgangs) in Abhängigkeit von den Positionsdaten. Hierdurch ist u.a. gewährleistet, dass das Druckbild auf jeden Behälter in einem vorgegebenen räumlichen Bezug zu dem Gestaltungsmerkmal aufgebracht wird, der (räumlicher Bezug) die zu bedruckende Behälterfläche festlegt, insbesondere auch eine Behälterfläche, auf der der Aufdruck für ein optimales Erscheinungsbild des bedruckten Behälters erfolgen soll. Ermöglicht wird dies u.a. dadurch, dass bereits der jeweilige Vorformling vor der Übergabe in die Streck- oder Blasformmaschine an einem Zentrier- und Halteelement zentriert gehalten ist, insbesondere axial, radial sowie rotativ fixiert, und der Vorformling bzw. der aus diesem durch Streck- oder Blasformen erzeugte Behälter an ein und dem selben Halte- oder Zentrierelement verbleibt und an diesem zentriert gehalten durch die Behandlungsstrecke bewegt wird. Dies eröffnet u.a. die Möglichkeit, an dem jeweiligen Halte- oder Zentrierelement eine Codierung beispielsweise in Form eines Encoderrings vorzusehen, mit der die Winkelposition erfasst oder festgelegt werden kann.
Im Detail wird durch Abtasten oder Erfassen der Codierung mit wenigstens einem Sensor (Sensorabtasten) vor dem Blasformen die beispielsweise zufällige Winkelposition erfasst, die das jeweilige Halte- oder Zentrierelement mit dem Vorformling vor dem Blasformen in Bezug auf seine Achse aufweist. Diese erfasste Winkelposition steht dann in einer definierten Winkelbeziehung zu der jeweiligen, beim Streck- oder Blasformen des Behälters verwendeten Blasform bzw. zu dem mit dieser Blasform erzeugten interessierenden Gestaltungsmerkmal. Nach dem Blasformen kann der jeweilige Behälter durch erneutes Sensorabtasten der Codierung des jeweiligen Zentrier- und Halteelementes und unter Berücksichtigung der vor dem Blasformen erfassten Winkelposition an der betreffenden Behandlungsstation für die Behandlung bzw. für das Bedrucken ausgerichtet werden und/oder an der betreffenden Behandlungsstation kann der Behandlungs- oder Druckvorgang bei um seine Behälterachse drehendem Behälter an der vor dem Blasformen erfassten Winkelposition oder an einer hiervon abgeleiteten Winkelposition gesteuert eingeleitet werden.

Grundsätzlich besteht auch die Möglichkeit, dass das jeweilige Zentrier- und Halteelement vor dem Blasformen durch Sensorabtasten der Codierung in einer vorgegebenen Winkelposition ausgerichtet wird, d.h. eine Winkelposition für das Zentrier- und Halteelement festgelegt wird, die (Winkelposition) in einer definierten Winkelbeziehung zu der jeweiligen für das Streck- oder Blasformen verwendeten Blasform bzw. zu dem mit dieser Blasform erzeugten Gestaltungselement steht. Mit dieser vor dem Blasformen festgelegten Winkelposition erfolgt dann wiederum an der wenigstens einen Behandlungsstation unter Drehen des Behälters um seine Behälterachse das Ausrichten des Behälters für die Behandlung bzw. für das Bedrucken und/oder das Einleiten des Behandlungs- oder Druckvorgangs.

Weist die Blasformmaschine mehrere Streck- oder Blasformen auf, so kann es zweckmäßig sein, beim Ausrichten des jeweiligen Behälters für die Behandlung bzw. für das Bedrucken und/oder beim Einleiten des Behandlungs- oder Druckvorgangs an der wenigstens einen Behandlungsstation auch die jeweilige Position zu berücksichtigen, die die für das Blasformen des Behälters verwendete Blasform aufwies, und zwar insbesondere dann, wenn hinsichtlich der Anordnung und/oder Positionierung der Blasformen beispielsweise an einem umlaufenden Rotor der Blasformmaschine größere Toleranzen bestehen. Die Berücksichtigung der Position der jeweiligen Blasform kann beispielsweise durch Sensorabtasten wenigstens einer Codierung an den Blasformen und durch Erzeugung entsprechender Positionsdaten oder Korrektursignale oder -werte erfolgen, welche beim Ausrichten der Behälter an der wenigstens einen Behandlungsstation und/oder beim Einleiten des Behandlungs- oder Druckvorgangs berücksichtigt werden. Grundsätzlich ist es aber auch möglich, beispielsweise in einem Probelauf der Blasformmaschine für die dortigen Blasformen deren Position berücksichtigende Korrekturwerte zu bilden und in einer Maschinensteuerung abzulegen, sodass diese Korrekturwerte dann beim Ausrichten der Behälter und/oder beim Einleiten des jeweiligen Behandlungs- oder Druckvorganges berücksichtigt werden können.

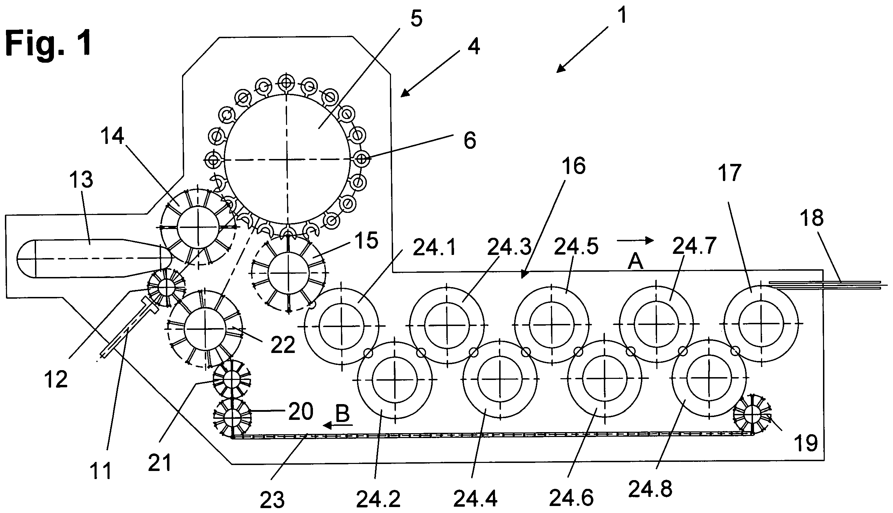

Weiterhin besteht die Möglichkeit, mit der vor dem Blasformen erfassten oder festgelegten Winkelposition des jeweiligen Zentrier- und Halteelementes an der wenigstens einen Bearbeitungsstation ein Vor- oder Grobausrichten des jeweiligen Behälters vorzunehmen, an das sich dann ein direktes, vorzugsweise berührungsloses Abtasten des jeweiligen Behälters bzw. des interessierenden Gestaltungsmerkmals anschließt, und zwar für ein exaktes Ausrichten des Behälters und/oder für das Einleiten des Behandlungs- oder Druckvorgangs. Dieses Abtasten wird beispielsweise mit einer dem Fachmann für diesen Zweck bekannten opto-elektrischen Einrichtung durchgeführt.
Sind die Blasformmaschine und die anschließende Behandlungsstrecke so ausgebildet, dass die Halte- oder Zentrierelemente und damit die an diesen gehaltenen Behälter nicht nur während des Blasformens eine definierte Winkelposition aufweisen, sondern diese definierte Winkelposition auch während der Bewegung durch die Behandlungsstrecke aufrecht erhalten bleibt, so weist der jeweilige Behälter an der wenigstens einen Behandlungsstation eine definierte Winkelposition auf. Hierbei ist es dann beispielsweise möglich, zum exakten Ausrichten des jeweiligen Behälters und/oder zum Einleiten des Behandlungs- oder Druckvorgangs den Behälter bzw. das dortige, interessierende Gestaltungsmerkmal abzutasten und in Bezug auf das Gestaltungsmerkmal exakt in eine vorgegebene Winkelstellung auszurichten und/oder beim Erfassen des Gestaltungsmerkmals den Behandlungs- oder Druckvorgang einzuleiten, eventuell unter Berücksichtigung von Korrekturwerten, die die Lage oder Position der jeweiligen Blasform berücksichtigen. Das Bedrucken der durch Streck- oder Blasformen hergestellten Behälter unmittelbar an ihrer Behälteraußenfläche erfolgt bei der Offenbarung vorzugsweise elektronisch bzw. digital, d.h. mit wenigstens einem nach dem Inkjet-Verfahren arbeitenden Druckkopf. Auch das Aufbringen eines eine Haft- oder Zwischenschicht bildenden Primers, d.h. das Aufbringen einer einen Haftgrund für den Aufdruck (Druckbild) bildenden Masse erfolgt bevorzugt mittels eines solchen Druckkopfes, sofern ein derartiger Primer bzw. Haftgrund erforderlich ist. Natürlich besteht grundsätzlich auch die Möglichkeit, den Primer aufzusprühen oder mittels Walze oder Tauchbad aufzutragen, wobei aber im Vergleich zu einem Druckverfahren, nicht analog flexibel die zu belegende Substratfläche geändert bzw. festgelegt werden kann.
Erfolgt das Trocknen bzw. Aushärten (Vernetzen) des Aufdrucks und/oder des Haftgrundes an wenigstens einer Behandlungsstation durch UV-Strahlung, so wird bevorzugt an dieser Behandlungsstation auch eine Entkeimung oder Sterilisation des jeweiligen Behälters mit UV-Strahlung durchgeführt, beispielsweise unter Verwendung von unterschiedlichen UV-Strahlungs-Quellen eventuell auch mit unterschiedlichem Spektrum oder unter Verwendung einer gemeinsamen UV-Strahlungs-Quelle.
Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Offenbarung. Auch wird der Inhalt der Ansprüche zu einem Bestandteil der Beschreibung gemacht.
Die Erfindung wird im Folgenden anhand der Figuren an einem Ausführungsbeispiel näher erläutert. Es zeigen:
- Fig. 1: in vereinfachter Darstellung und in Draufsicht eine Anlage zum Herstellen von Behältern in Form von Flaschen aus Kunststoff, beispielsweise in Form von PET-Flaschen durch Streck- oder Blasformen und zum anschließenden Behandeln der hergestellten Behälter;
- Fig. 2: in Teildarstellung eine Streck- oder Blasform einer Behälterstreck- oder Blasformmaschine der Anlage der Figur 1, zusammen mit einer an einem Zentrier- und Halteelement oder einem Behältergreifer im Bereich der Flaschenmündung gehaltenen und mit der Blasform hergestellten Flasche;
- Fig. 3: in perspektivischer Darstellung die geöffnete Blasform zusammen mit einem an einem Zentrier- und Halteelement oder Behältergreifer gehaltenen Vorformling vor dem Streck- oder Blasformen der jeweiligen Flasche.
Die in der Figur 1 dargestellte und dort allgemein mit 1 bezeichnete Anlage dient zum Herstellen von Behältern in Form von Flaschen 2 aus Kunststoff, vorzugsweise aus PET durch Streck- oder Blasformen unter Verwendung von Vorformlingen 3 aus diesem Kunststoff, beispielsweise aus PET sowie zum anschließenden Behandeln der hergestellten Flaschen 2.

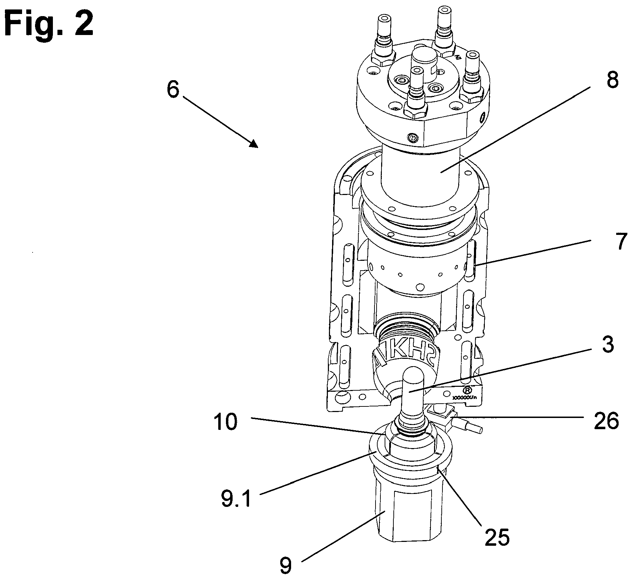

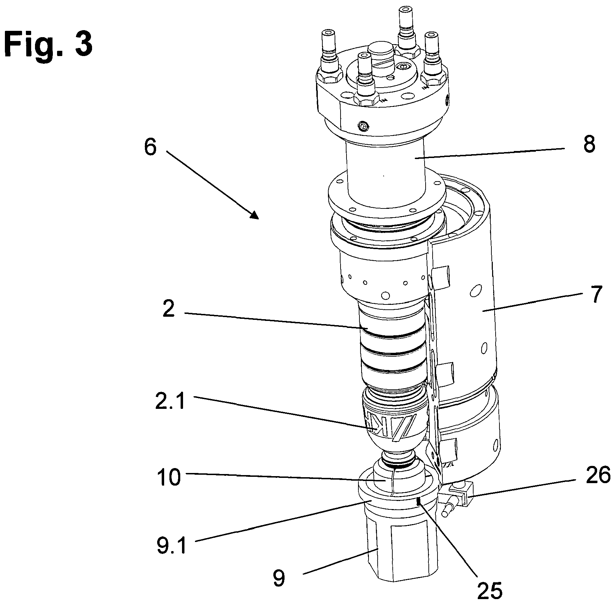

Die Anlage 1 umfasst hierfür u.a. eine Streck- oder Blasformmaschine 4 mit einem um eine vertikale Maschinenachse umlaufend antreibbaren Rotor 5, an dessen Umfang in gleichmäßigen Winkelabständen verteilt mehrere Blasformen 6 vorgesehen sind. Diese sind in der dem Fachmann bekannten Weise mehrteilig ausgebildet, und zwar u.a. bestehend aus zwei schalenförmigen seitlichen Blasformelementen 7, von denen in den Figuren 2 und 3 jeweils nur ein Element dargestellt ist, und aus einem oberen Blasformelement 8, welches den Formraum der Blasform 6 an ihrer Oberseite verschließt. Während des Streck- oder Blasformens ist der Formraum der jeweiligen Blasform 6 an der Unterseite durch ein Zentrier- oder Trägerelement 9 (Puck) verschlossen, an dem zunächst der jeweilige Vorformling 3 im Bereich seines offenen, die spätere Flaschenöffnung bildenden Endes und anschließend auch die durch Streck- oder Blasformen gebildete Flasche 2 im Bereich ihrer Flaschenöffnung zentriert gehalten ist, und zwar über mehrere radial zu einer Mittelachse des Zentrier- und Halteelementes 9 und damit zur Achse des Vorformlings 3 und der Flasche 2 bewegliche Halte- oder Klemmbacken 10.

Die generelle Arbeitsweise der Anlage 1 kann dahingehend beschrieben werden, dass die über eine Transportstrecke 11 zugeführten Vorformlinge 3 zunächst über einen Transportstern 12 an eine Vorheizstrecke 13 (Vorformling-Ofen) gelangen und nach dem Vorheizen in der Vorheizstrecke 13 über einen weiteren Transportstern 14 jeweils einzeln nacheinander an eine Blasform 6 übergeben werden. Unmittelbar nach dem Blasformen gelangen die hergestellten Flaschen 2 über einen Transportstern 15 an eine Behandlungsstrecke 16, in der sie in einer Transportrichtung (Pfeil A) bewegt in der nachstehend noch näher beschriebenen Weise behandelt werden. Nach dem Passieren der Behandlungsstrecke 16 gelangen die behandelten Flaschen 2 über einen beispielsweise von einem Transportstern 17 gebildeten Behälterauslauf an einen äußeren Transporteur 18, über welchen die Flaschen 2 einer weiteren Verwendung, beispielsweise einer Füllmaschine zugeführt werden.

Eine Besonderheit der Anlage 1 besteht darin, dass jeder Vorformling 3 bereits bei seiner Übergabe von dem Transporteur 11 an den Transportstern 12 dort von einem Zentrier- oder Halteelement 9 aufgenommen und an seinem offenen nach unten weisenden Ende zwischen den Klemmbacken 10 dieses Zentrier- und Halteelementes zentriert eingespannt wird, und dass nicht nur jeder Vorformling 3 an seinem eigenen Zentrier- und Halteelement 9 zentriert gehalten durch die Vorheizstrecke 13 und den Transportstern 14 an jeweils eine Blasform 6 der Streck-oder Blasformmaschine 4 gelangt und die aus ihm geformte Flasche 2 an dem Zentrier- und Halteelement innerhalb der Blasformmaschine 4 gehalten ist, sondern dass das jeweilige Zentrier- und Halteelement 9 die hergestellte Flasche 2 auf ihrem Weg über den Transportstern 15 durch die Behandlungsstrecke 16 bis an das Ende dieser Behandlungsstrecke begleitet und jeweils in der erforderlichen Weise hält und zentriert. Natürlich ist von der Erfindung auch umfasst, dass der Vorformling mit der nach obenweisenden Öffnung in geeigneter Weise mittels eines Zentrier- und Halteelementes, worunter hier auch ein Greifer zu verstehen ist, transportiert und gehalten wird. Erst am Behälterauslauf (Transportstern 17) wird die jeweilige behandelte Flasche 2 von ihrem Zentrier- und Halteelement 9 freigegeben, so dass dieses dann über eine Transportstrecke, die bei der in der Figur 1 dargestellten Anlage 1 von den Transportsternen 19 - 22 und dem Lineartransport 23 gebildet ist, an den Transportstern 12 zur Aufnahme eines weiteren Vorformlings 3 zurück bewegt werden kann (Pfeil B).

Die unmittelbar an dem Behälterauslauf (Transportstern 15) der Streck- oder Blasformmaschine 4 anschließende Behandlungsstrecke 16 besteht bei der dargestellten Ausführungsform aus mehreren Behandlungsmodulen, d.h. beispielsweise aus insgesamt acht Behandlungsmodulen 24.1 - 24.8, die entsprechend der Wertigkeit ihrer Bezugsziffern in der Transportrichtung A, in der die Flaschen 2 durch die Behandlungsstrecke 6 bewegt werden, unmittelbar aneinander anschließen, und zwar derart, dass die an ihrem Zentrier- und Halteelement 9 gehaltenen Flaschen 2 jeweils zusammen mit diesem Zentrier- und Halteelement an Übergabebereichen von einem Behandlungsmodul 24.1 - 24.7 an ein weiteres Behandlungsmodul 24.2 - 24.8 weitergegeben werden. Das Behandlungsmodul 24.8 ist so ausgebildet, dass nach Abschluss der Behandlung die jeweilige Flasche 2 unter Freigabe von ihrem Zentrier- und Halteelement 9 an den den Behälterauslauf bildenden Transportstern 17 übergeben wird.

Die Behandlungsmodule 24.1 - 24.8 bestehen jeweils im Wesentlichen aus einem um eine vertikale Achse umlaufend antreibbaren Rotor mit einer Vielzahl von Behandlungspositionen zur Aufnahme jeweils eines Zentrier- und Halteelementes 9 mit der an diesem gehaltenen Flasche 2. Der Behandlung entsprechend sind an den Behandlungsmodule 24.1 - 24.8 oder den dortigen Behandlungsstationen Einrichtungen für die Behandlung vorgesehen. Die Rotoren der Behandlungsmodule 24.1 - 24.8 sind synchron mit den übrigen umlaufenden Elementen der Anlage 1 angetrieben, und zwar derart, dass die Rotoren von in der Transportrichtung A aufeinander folgender Behandlungsmodulen 24.1 - 24.8 jeweils gegenläufig umlaufen, sodass sich die Zentrier- und Halteelemente 9 mit den Flaschen 2 auf einem wellenförmigen Transportweg durch die Behandlungsmaschine 16 bewegen. Die Behandlung der Flaschen 2 in den einzelnen Behandlungsmodulen 24.1 - 24.8 erfolgt jeweils auf einem Winkelbereich der Drehbewegung des zugehörigen Rotors und dabei insbesondere auch bei speziellen Behandlungsarten durch gesteuertes Drehen oder Schwenken der Flaschen 2 um ihre vertikale Flaschenachse. Die Zentrier- und Halteelement 9 sind hierfür beispielsweise jeweils mit einem entsprechenden Antrieb ausgestattet, der nach dem Ankoppeln an den Rotor oder die Arbeitsstation eines Bearbeitungsmoduls 24.1 - 24.8 die für die Bearbeitung notwendige gesteuerte Dreh- oder Schwenkbewegung der jeweiligen Flaschen 2 um ihre Flaschenachse durchführt, oder aber das jeweilige Zentrier- und Halteelement 9 wird nach der Übergabe an eine Behandlungsstation eines Behandlungsmoduls 24.1 - 24.8 an einen dort vorgesehenen Antrieb für die gesteuerte Schwenk- oder Drehbewegung der jeweiligen Flasche 2 um ihre Flaschenachse angekoppelt.

In einigen der Behandlungsmodule 24.1 - 24.8 erfolgt das Bedrucken der Flaschen 2 an ihrer Außenfläche oder Mantelfläche, vorzugsweise mit einem mehrfarbigen Aufdruck, wobei dann jeder Farbsatz dieses Aufdrucks z.B. in einem eigenständigen Behandlungsmodul erzeugt wird. An den Behandlungsstationen dieser Behandlungsmodule sind entsprechende Druckköpfe vorgesehen, vorzugsweise digitale Druckköpfe, beispielsweise nach dem sogenannten Inkjet-Verfahren arbeitende Druckköpfe, die entsprechend einer elektronisch abgelegten Druckform angesteuert werden.

Wenigstens ein Behandlungsmodul ist zum Trocknen oder Aushärten des Aufdrucks bzw. der Druckfarben oder Tinten durch Energieeintrag, beispielsweise durch Erhitzen, vorzugsweise aber unter Verwendung einer nicht thermischen oder im Wesentlichen nicht thermischen Energiestrahlung (z.B. UV-Strahlung, Beta-Strahlung, Mikrowellen-Strahlung usw.) ausgebildet, wobei es durchaus zweckmäßig sein kann, jedes Behandlungsmodul zum Bedrucken einer Druckfarbe zugleich auch mit einer Einrichtung zum Voraushärten oder Vortrocknen dieser Druckfarbe auszugestatten oder aber die Behandlungsstrecke 16 so auszuführen, dass sich jeweils an ein Behandlungsmodul zum Bedrucken ein Behandlungsmodul zum Vortrocknen oder Voraushärten oder zum Trocknen oder Aushärten der Druckfarbe in Transportrichtung anschließt. Wenigstens eines der Behandlungsmodule 24.1 - 24.8 dient weiterhin zum Entkeimen oder Sterilisieren der Flaschen 2 insbesondere an deren an deren Mündungsbereich und/oder Innenflächen, und zwar vorzugsweise wiederum durch Behandeln mit einer Energiestrahlung und dabei sehr bevorzugt mit der gleichen Art von Energiestrahlung, die auch zum Trocknen oder Aushärten der Druckfarben verwendet wird.

Bevorzugt erfolgt das Entkeimen oder Sterilisieren so wie das Trocknen oder Aushärten der Druckfarben in ein und demselben Behandlungsmodul, z.B. in dem Behandlungsmodul 24.8 bzw. an den dortigen Arbeitsstationen an denen dann bevorzugt auch das Entkeimen oder Sterilisieren der an dem Transportstern 12 zurückgeführten Zentrier- und Halteelemente 9 erfolgt.

Jedes Zentrier- und Halteelement 9 ist an einem die Zentrier- und Halteelementachse konzentrisch umschließenden ringförmigen Fläche 9.1 mit wenigstens einer Codierung 25 (z.B. Encoderring) versehen, die von wenigstens einem Sensor 26 erfassbar ist und die die Winkelposition des jeweiligen Zentrier- und Halteelementes 9 in Bezug auf die Zentrier- und Halteelementachse definiert. Die Codierung 25 kann in unterschiedlichster Weise ausgeführt sein, beispielsweise als optisch-elektrisch erfassbare Codierung, z.B. in Form von Licht unterschiedlich reflektierenden Markierungen oder Flächenbereichen oder in Form von Durchbrüchen oder Fenstern und/oder in Form einer transparenten mit Markierungen versehenen Fläche usw., und/oder als magnetische Codierung in Form von einer Vielzahl von in Umfangsrichtung des Zentrier- und Halteelementes 9 aufeinander folgenden Magnetpolen unterschiedlicher Polarität und/oder als mechanischen Codierung in Form von in Umfangsrichtung des Zentrier- und Halteelementes 9 bzw. der Ringfläche 9.1 aufeinander folgenden Erhebungen und Vertiefungen usw. Der Sensor 26 ist selbstverständlich an die jeweilige Art der Codierung angepasst, sodass er ein der Winkelposition des Zentrier- und Halteelementes 9 entsprechendes Sensorsignal liefert.

An der Unterseite jeder Blasform 6 bzw. an der Unterseite des dortigen Blasformelementes 7 ist ein Sensor 26 vorgesehen, sodass mit diesem die Winkelposition erfasst oder festgelegt werden kann, die das Zentrier- und Halteelementes 9 beim Streck- oder Blasformen der jeweiligen Flasche 2 aufweist und die in einer bekannten bzw. definierten Winkelbeziehung zu einem interessierenden Gestaltungsmerkmal 2.1 der hergestellten Flasche 2 steht, welches beispielsweise von einer Einprägung (Embossing) in der Flasche 2 oder von wenigstens einer beim Blasformen erzeugten Naht gebildet ist.

Die mit dem wenigstens einem Sensor 26 erfasste oder festgelegte Winkelposition bzw. entsprechende Positionsdaten werden an die nachfolgende Behandlungsstrecke 16 weitergeben, und zwar zur Steuerung insbesondere der für das Bedrucken der Flaschen 2 verwendeten Behandlungsmodule und deren Behandlungsstationen derart, dass nicht nur die einzelnen Farbsätze eines mehrfarbigen Aufdrucks in der erforderlichen Position auf die jeweilige Flasche 2 aufgedruckt werden, sondern sich der gesamte Aufdruck in einer geforderten Position zu den beim Streck- oder Blasformen erzeugten Gestaltungsmerkmalen 2.1 befindet.

Wie eingangs beschrieben wird durch Abtasten oder Erfassen der Codierung 25 mit dem Sensor 26 vor dem Blasformen die beispielsweise zufällige Winkelposition erfasst, die das jeweilige Halte- oder Zentrierelement 9 mit dem Vorformling 3 vor dem Blasformen aufweist. Diese erfasste Winkelposition steht dann in einer definierten bzw. durch die Konstruktion der Blasformmaschine 4 vorgegebenen Winkelbeziehung zu der jeweiligen, beim Streck- oder Blasformen der Flasche 2 verwendeten Blasform 6 bzw. zu dem mit dieser Blasform erzeugten Gestaltungsmerkmal 2.1. Nach dem Blasformen kann die jeweilige Flasche 2 durch erneutes Abtasten der Codierung 25 des jeweiligen Zentrier- und Halteelementes 9 und unter Berücksichtigung der vor dem Blasformen erfassten Winkelposition an der betreffenden Behandlungsstation der Behandlungsstrecke 16 für das Bedrucken ausgerichtet werden und/oder an dieser Behandlungsstation kann der Druckvorgang bei um ihre Flaschenachse drehender Flasche 2 an der vor dem Blasformen erfassten Winkelposition oder an einer hiervon abgeleiteten Winkelposition gesteuert eingeleitet werden.

Grundsätzlich besteht auch die Möglichkeit, dass das jeweilige Zentrier- und Halteelement 9 vor dem Blasformen an der jeweiligen Blasform 6 durch Abtasten der Codierung 25 in einer vorgegebenen Winkelposition ausgerichtet wird, d.h. eine Winkelposition für das Zentrier- und Halteelement 9 festgelegt wird, die (Winkelposition) in einer definierten Winkelbeziehung zu der jeweiligen Blasform 6 und damit zu dem mit dieser Blasform 6 erzeugten Gestaltungsmerkmal 2.1 steht. Mit dieser vor dem Blasformen festgelegten Winkelposition erfolgt dann wiederum an der wenigstens einen Behandlungsstation der Behandlungsstrecke 16 unter Drehen der Flasche 2 um ihre Flaschenachse das Ausrichten der Flasche für das Bedrucken und/oder das Einleiten des Druckvorgangs.

In einer besonders vorteilhaften Ausgestaltung entfällt ein Sensor zur Bestimmung der Winkelposition des Zentrier- und Halteelementes. Bei einer derartigen Ausgestaltung wird die relativ zueinander bestehende Winkelposition von Zentrier- und Halteelement 9 und der Blasform bzw. den Teilen der Blasform als Steuergröße genutzt. So kann zum Beispiel die Nahtposition des Behälters, die durch die Blasform hinsichtlich der Winkelposition immer eindeutig definiert ist, als Nullwert für die Winkelposition des Behälters und/oder des Zentrier- und Halteelementes übernommen bzw. festgelegt werden, oder es können in einer anderen geeigneten Weise diese bekannten und eindeutigen Daten der Winkelposition durch die Anlagensteuerung weiter verarbeitet werden.

Bei einer anderen Ausführung ist vorsehbar, dass bei verdrehsicherer Übergabe der Behälter aus dem Blasrad an ein bzw. die nachfolgenden Behandlungs- und/oder Transportvorrichtungen, für eine Feinausrichtung der Winkelposition nur ein sehr kleiner Winkel des Behälters optisch erfasst werden muss, wozu eine einzige Kamera oder vergleichbares optisches Erfassungssystem hinreichend ist.

Es kann zweckmäßig sein, beim Ausrichten der jeweiligen Flasche 2 für das Bedrucken und/oder beim Einleiten des Druckvorgangs an der wenigstens einen Behandlungsstation der Behandlungsstrecke 16 auch die Lage oder Position zu berücksichtigen, die die für das Blasformen der Flasche 2 verwendete Blasform 6 aufweist. Dies kann beispielsweise durch Sensorabtasten wenigstens einer Codierung an den Blasformen 6 und durch Erzeugung entsprechender Korrektursignale oder -werte erfolgen, welche beim Ausrichten der Flaschen 2 an der wenigstens einen Behandlungsstation und/oder beim Einleiten des Druckvorgangs berücksichtigt werden. Grundsätzlich ist es aber auch möglich, beispielsweise in einem Probelauf der Blasformmaschine 4 für die dortigen Blasformen 6 deren Position berücksichtigende Korrekturwerte zu bilden und in einer Maschinensteuerung der Anlage 1 abzulegen, sodass diese Korrekturwerte dann beim Ausrichten der Flaschen 2 und/oder beim Einleiten des jeweiligen Druckvorganges berücksichtigt werden können.

Weiterhin besteht auch die Möglichkeit, mit der vor dem Blasformen erfassten oder festgelegten Winkelposition des jeweiligen Zentrier- und Halteelementes 9 an der wenigstens einen Bearbeitungsstation der Behandlungsstrecke 16 ein Vor- oder Grobausrichten der jeweiligen Flasche 2 vorzunehmen, an das sich dann ein direktes, vorzugsweise berührungsloses Abtasten der Flasche 2 bzw. des interessierenden Gestaltungsmerkmals 2.1 anschließt, und zwar für ein exaktes Ausrichten der Flasche 2 und/oder für das Einleiten des Druckvorgangs. Dieses Abtasten wird dann beispielsweise mit einer nicht dargestellten, aber dem Fachmann für diesen Zweck bekannten opto-elektrischen Einrichtung durchgeführt.

Es versteht sich, dass an den Bearbeitungsstationen, an denen ein Ausrichten der jeweiligen Flasche 2 vor deren Bearbeitung, beispielsweise vor dem Bedrucken erforderlich ist, ebenfalls die wenigstens eine Codierung 25 erfassende Sensoren vorgesehen sind.

Es besteht weiterhin die Möglichkeit, die Erfassung oder Festlegung der Winkelposition durch den wenigstens einen Sensor 26 für das Ausrichten der Flaschen 2 und/oder Einleitung der Behandlung nach dem Blasformen bereits vor der Übergabe des jeweiligen Zentrier- und Halteelementes an die jeweilige Blasform 6 vorzunehmen, beispielsweise im Bereich des Transportsternes 14, wobei dann allerdings die Ausbildung so getroffen ist, dass bei der Übergabe des jeweiligen Zentrier- und Halteelementes 9 von dem Transportstern 14 an eine Blasform 6 keine Änderung der Winkelposition des Zentrier- und Halteelementes 9 oder aber eine stets nur gleichbleibende und genau definierte Änderung dieser Winkelposition erfolgt.

Wesentliche Vorteile der Anlage 1 bzw. des mit dieser Anlage durchgeführten Verfahrens sind u.a., dass die Flaschen 2 unmittelbar nach dem Streck- oder Blasformen der Behandlungsstrecke 16 zugeführt werden und dadurch ein hoher Reinigungsgrad der Flaschenoberfläche gewährleistet ist, der u.a. für die Qualität des Druckbildes ganz entscheidend ist. Der Auslaufstern 15 der Blasmaschine 4 dient gleichzeitig als Einlaufstern der Behandlungsstrecke 16 bzw. des dortigen ersten Behandlungsmoduls 24.1. Durch das unmittelbare Anschließen der Behandlungsstrecke 16 an die Blasformmaschine 4 bzw. an deren Auslaufstern 15 wird weiterhin auch eine übermäßige Abkühlung der Flaschen 2 vermieden, sodass sich für diese eine erwärmte Oberfläche erreicht wird, was sich insbesondere bei Verwendung von wasserbasierenden Druckfarben oder Drucktinten und/oder Primern auf die Tropfenbildung beim Bedrucken und damit auf die Qualität des Druckbildes vorteilhaft auswirkt. Ein Aufheizen der Flaschen 2 vor dem Bedrucken ist nicht erforderlich. Weiterhin wird durch die erwärmte Oberfläche der Flaschen 2 auch das Trocknen bzw. Aushärten der Druckfarben gefördert.

Durch die Halterung der Flaschen 2 an dem jeweiligen Zentrier- und Halteelement 9 und durch die Codierung 25 an den Zentrier- und Halteelementen 9 ist ein optimales Ausrichten der Flaschen 2 beim Bedrucken in einfacher Weise möglich. Insbesondere kann die für das Bedrucken bzw. für das positionsgenau Aufbringen der Farbauszüge eines mehrfarbigen Aufdrucks ohnehin benötigte Codierung bzw. der von dieser abgeleitete Impuls bereits für das Streck- oder Blasformen genutzt werden, um das jeweilige Zentrier- und Halteelement mit dem Vorformling in einer vorgegebenen Winkelposition so auszurichten, dass die Codierung am jeweiligen Zentrier- und Halteelement 9 auf den jeweils zu bedruckenden Flaschenbereich exakt abgestimmt ist. Die jeweilige Blasform 6 und das Zentrier- und Halteelement 9 sind somit schon bei Entstehung der jeweiligen Flasche 2 aufeinander abgestimmt.

Da das Bedrucken der Flaschen 2 in Abhängigkeit von dem bei der Erfassung der Codierung erzeugten Impuls erfolgt, ist eine zusätzliche Ausrichtung der jeweiligen Flasche 2 nicht erforderlich.
Erfolgt die Entkeimung bzw. Sterilisation der Flaschen 2 z.B. im Bereich der Flaschenmündung und/oder an den Flascheninnenflächen durch UV-Strahlung wenigstens einer UV-Strahlungs-Quelle, so wird das Aushärten bzw. Vernetzen der Druckfarben bevorzugt ebenfalls mit UV-Strahlung durchgeführt, vorzugsweise mit einer UV-Strahlung derjenigen Strahlungsquelle und/oder mit demjenigen UV-Spektrum, welche bzw. welches auch für die Entkeimung bzw. Sterilisation Verwendung findet.
Die Erfindung wurde voranstehend an einem Ausführungsbeispiel beschrieben. Es versteht sich, dass zahlreiche Änderungen sowie Abwandlungen möglich sind, ohne dadurch der der Erfindung, die in dem Anspruch 1 definiert ist, zugrundeliegende Erfindungsgedanke verlassen wird.
So wurde vorstehend davon ausgegangen, dass das Streck- oder Blasformen der Flaschen 2 in der Weise erfolgt, dass diese zumindest nach dem Blasformen eine Überkopf-Position, d.h. mit ihrer Flaschenachse zwar in vertikaler oder im Wesentlichen in vertikaler Richtung orientiert, aber mit ihrer Flaschenöffnung unten liegend angeordnet sind und in dieser Lage durch die Behandlungsstrecke 16 transportiert werden, wobei die Flaschen 2 dann beispielsweise in dem den Behälterauslauf bildenden Transportstern 17 gewendet bzw. in eine Lage mit der Falschenöffnung nach oben weisend gebracht werden. Selbstverständlich ist bei entsprechender Ausbildung der Blasformmaschine 4 bzw. der Blasformen 6 auch eine andere Lage der Flaschen 2 möglich.
Vorstehend wurde weiterhin davon ausgegangen, dass sämtliche mit den Bezugsziffern 24.1 - 24.8 bezeichnete Einheiten Behandlungsstationen sind. Selbstverständlich besteht auch die Möglichkeit die Behandlungsstrecke 16 so auszuführen, dass nur ein Teil dieser Einheiten Behandlungsmodule sind, beispielsweise nur die Einheiten 24.1, 24.3, 24.5 und 24.7, während die restlichen Einheiten, beispielsweise die Einheiten 24.2, 24.4, 24.6 und 24.8 im Wesentlichen die Funktion von Transportsternen oder zumindest teilweise die Funktion von Behandlungsmodulen für das Entkeimen bzw. Sterilisieren und/oder das Trocknen oder Aushärten (Vernetzen) der Druckfarben aufweisen.

### Bezugszeichenliste

- 1: Anlage
- 2: Flasche
- 2.1: Gestaltungsmerkmal
- 3: Vorformling
- 4: Blasformmaschine
- 5: Rotor
- 6: Blasform
- 7,8: Blasformelement
- 9: Zentrier- und Halteelement
- 9.1: Ringfläche am Zentrier- und Halteelement 9
- 10: Klemmbacken
- 11: Zuführung für Vorformlinge 3
- 12: Transportstern
- 13: Vorheizstrecke oder Vorformling-Ofen
- 14, 15: Transportstern
- 16: Behandlungsstrecke
- 17: Behälterauslauf oder Transportstern
- 18: äußerer Transporteur
- 19 - 22: Transportstern
- 23: Förderstrecke
- 24.1 - 24.8: Behandlungsmodul
- 25: Codierung oder Codierelement (Encoderring)
- 26: Sensor
- A: Transportrichtung der Flaschen 2 durch die Behandlungsstrecke 16
- B: Transportrichtung der Zentrier- und Halteelement 9 (Pucks) auf der Transportstrecke 23

## Patentansprüche

1. Verfahren zum Herstellen von Behälter (2) aus Kunststoff, vorzugsweise aus PET, durch Streck- oder Blasformen unter Verwendung von Vorformlingen (3) in einer Blasformmaschine (4) und zum anschließenden Behandeln der Behälter (2) an wenigstens einer Behandlungsstation einer Behälterbehandlungsstrecke (16), wobei vor dem Ende des Streck- oder Blasformens die Winkelposition des jeweiligen Behälters (2) erfasst wird, dass eine Weitergabe dieser Winkelposition oder dieser Winkelposition entsprechender erster Positionsdaten an die wenigstens eine nachfolgende Behandlungsstation zum gesteuerten Einleiten des Behandlungsvorgangs in Abhängigkeit von den Positionsdaten erfolgt, dass der jeweilige Vorformling (3) an einem Zentrier- und Halteelement (9) gehalten in die Streck- oder Blasformmaschine (4) eingebracht wird, und dass der Behälter (2) nach dem Streck- oder Blastormen weiterhin an dem selben Zentrier- und Halteelement (9) gehalten durch die Behandlungsstrecke (16) bewegt wird und mit Hilfe des Zentrier- und Halteelementes (9) das Ausrichten und/oder Drehen des jeweiligen Behälters (2) an der wenigstens einen Bearbeitungsstation erfolgt.

2. Verfahren nach Anspruch 1, **dadurch gekennzeichnet, dass** die Erfassung der Winkelposition des jeweiligen Behälters (2) in der Blasmaschine (4) und/oder in einer der Blasmaschine vorausgehenden Förder- und/oder Behandlungsstrecke für die Vorformlinge (3) erfolgt.

3. Verfahren nach Anspruch 1 oder 2, **dadurch gekennzeichnet, dass** das Zentrier- und Halteelement (9) mit wenigstens einer Codierung (25), beispielsweise in Form eines Encoderrings vorsehen ist, und dass die Codierung (25) für die Erfassung oder Festlegung der Winkelposition des Behälters oder wenigstens eines Gestaltungsmerkmals (2.1) des Behälters (2) mit wenigstens einem Sensor (26) abgetastet wird.

4. Verfahren nach einem der vorhergehenden Ansprüche, **dadurch gekennzeichnet, dass** die Erfassung oder Festlegung der Winkelposition das jeweiligen Behälters (2) oder des Gestaltungsmerkmals (2.1) des Behälters (2) vor der Übergabe des vorzugsweise vorgeheizten Vorformlings (3) an eine Blasform (6) der Blasformmaschine (4) oder nach der Übergabe an die Blasform (6) erfolgt.

5. Verfahren nach elnem der vorhergehenden Ansprüche, **dadurch gekennzeichnet, dass** die Erfassung oder Festlegung der Winkelposition des jeweiligen Behälters (2) oder des Gestaltungsmerkmals (2.1) vor dem Vorheizen des Vorformlings (3) erfolgt.

6. Verfahren nach einem der vorhergehenden Ansprüche, **dadurch gekennzeichnet, dass** die Lage und/oder Position der Blasform (6) und/oder eines das Gestaltungsmerkmal (2.1) formenden Teils der Blasform (6) zur Bildung zweite Positionsdaten erfasst werden, beispielsweise zur Korrektur der ersten Positionsdaten und/oder der mit diesen erfolgenden Steuerung der wenigstens einen Behandlungsstation.

7. Verfahren nach einem der vorhergehenden Ansprüche, **dadurch gekennzeichnet, dass** an der wenigstens einen Behandlungsstation ein Ausrichten oder Grobausrichten des jeweiligen Behälters (2) unter Berücksichtigung der ersten und/oder zweiten Positionsdaten erfolgt.

8. Verfahren nach einem der vorhergehenden Ansprüche, **dadurch gekennzeichnet, dass** an der wenigstens einen nachfolgenden Behandlungsstation ein Bedrucken, vorzugsweise digitales Bedrucken der Behälter (2) erfolgt, und zwar unter Ausrichten der Behälter (2) und/oder unter Einleitung des Druckvorgangs gesteuert durch die ersten und/oder zweiten Positionsdaten, vorzugsweise unter Drehen der Behälter (2) um ihre Behälterachse während des Bedruckens.

9. Verfahren nach einem der vorhergehenden Ansprüche, dadurch gekennzelchnet, dass die Behandlung jedes Behälters (2) an mehreren Behandlungsstationen erfolgt, die in einer Transportrichtung (A) der Behälter durch die Behandlungsstrecke (16) aneinander anschließen, wobei die Behandlungsstationen vorzugsweise jeweils an einem umlaufend antreibbaren Transportelement beispielsweise unterschiedlicher, in Transportrichtung aufeinander folgender Behandlungsmodule (24.1 -24.8) vorgesehen sind.

10. Verfahren nach einem der vorhergehenden Ansprüche, **dadurch gekennzeichnet, dass** an wenigstens einer Behandlungsstation ein Trocknen oder Aushärten der wenigstens einen beim Bedrucken verwendeten Druckfarbe oder Drucktinte sowie zugleich ein Entkeimen der Behälter (2) zumindest in einem Teilbereich mit einer Energie-Strahlung, beispielsweise jeweils mit durch UV-Strahlung erfolgen.

11. Verfahren nach einem der vorhergehenden Ansprüche, **dadurch gekennzeichnet, dass** das Behandeln der Behälter (2) unmittelbar nach dem Streck- oder Blasformen erfolgt.

## Claims

1. Method for producing containers (2) made of plastic, preferably from PET, by stretch or blow moulding, making use of preforms (3) in a blow moulding machine (4) and for the subsequent treatment of the containers (2) in at least one treatment station of a container treatment segment (16), wherein, before the end of the stretch or blow moulding, the angular position of the respective container (2) is detected, this angular position or first position data corresponding to this angular position is passed on to the at least one following treatment station for the controlled initiation of the treatment procedure dependent on the position data, the respective preform (3) is introduced into the stretch or blow moulding machine (4) held in a centring and holding element (9), and the container (2), after the stretch or blow moulding, is moved, held by the same centring and holding element (9), through the treatment segment (16), and, with the aid of the centring and holding element (9), the alignment and/or rotation of the respective container (2) takes place at the at least one treatment station.

2. Method according to claim 1, **characterised in that** the detection of the angular position of the respective container (2) takes place in the blow moulding machine (4) and/or in a conveyor segment and/or treatment segment for the preforms (3) upstream of the blow moulding machine.

3. Method according to claim 1 or 2, **characterised in that** the centring and holding element (9) is provided with at least one coding (25), for example in the form of an encoder ring, and that the coding (25) is scanned by at least one sensor (26) for the detection or determination of the angular position of the container, or at least of a design feature (2.1) of the container (2).

4. Method according to any one of the preceding claims, **characterised in that** the detection or determination of the angular position of the respective container (2) or of the design feature (2.1) of the container (2) takes place before the transfer of the preferably pre-heated preform (3) to a blow mould (6) of the blow moulding machine (4) or after the transfer to the blow mould (6).

5. Method according to any one of the preceding claims, **characterised in that** the detection or determination of the angular position of the respective container (2) or of the design feature (2.1) takes place before the pre-heating of the preform (3).

6. Method according to any one of the preceding claims, **characterised in that** the location and/or position of the blow mould (6) and/or of a part of the blow mould (6) forming the design feature (2.1) are detected for the formation of second position data, for example for the correction of the first position data and/or for the controlling, carried out with this data, of the at least one treatment station.

7. Method according to any one of the preceding claims, **characterised in that**, at the at least one treatment station, an alignment or rough alignment of the respective container (2) takes place, taking account of the first and/or second position data.

8. Method according to any one of the preceding claims, **characterised in that**, at the at least one following treatment station, a printing takes place, preferably digital printing, of the containers (2), and specifically with the alignment of the containers (2) and/or with the initiation of the printing process, in a controlled manner by means of the first and/or second position data, preferably with the rotation of the containers (2) about their container axes during the printing.

9. Method according to any one of the preceding claims, **characterised in that** the treatment of each container (2) takes place at a plurality of treatment stations, which connect to one another in a transport direction (A) of the containers through the treatment segment (16), wherein the treatment stations are preferably provided in each case at a transport element which can be circumferentially driven, for example in the form of different treatment modules (24.1-24.8) following one another in the transport direction.

10. Method according to any one of the preceding claims, **characterised in that** in at least one treatment station a drying or hardening of the at least one printing colour or printing ink used during the printing takes place, as well as, at the same time, an elimination of bacteria of the containers (2) at least in a part region by an energy radiation, for example in each case by UV radiation.

11. Method according to any one of the preceding claims, **characterised in that** the treatment of the containers (2) takes place immediately after the stretch or blow moulding.

## Revendications

1. Procédé servant à fabriquer des contenants (2) en matière plastique, de préférence en PET, par moulage par étirage ou soufflage en utilisant des préformes (3) dans une machine de moulage par soufflage (4) et servant à traiter par la suite les contenants (2) au niveau d'au moins un poste de traitement d'une ligne de traitement de contenants (16), dans lequel
la position angulaire du contenant (2) concerné est détectée avant la fin du moulage par étirage ou soufflage, un transfert de ladite position angulaire ou de premières données de position correspondant à ladite position angulaire à l'au moins un poste de traitement qui suit est effectué afin d'initier de manière commandée l'opération de traitement en fonction des données de position, la préforme (3) concernée maintenue au niveau d'un élément de centrage et de maintien (9) est introduite dans la machine de moulage par étirage ou soufflage (4), et le contenant (2) toujours maintenu au niveau du même élément de centrage et de maintien (9) est déplacé à travers la ligne de traitement (16) après le moulage par étirage ou soufflage et l'orientation et/ou la rotation du contenant (2) concerné au niveau de l'au moins un poste de traitement sont effectuées à l'aide de l'élément de centrage et maintien (9).

2. Procédé selon la revendication 1, **caractérisé en ce que** la détection de la position angulaire du contenant (2) concerné dans la machine de soufflage (4) et/ou dans une ligne de convoyage et/ou de traitement précédent la machine de soufflage est effectuée pour les préformes (3).

3. Procédé selon la revendication 1 ou 2, **caractérisé en ce que** l'élément de centrage et de maintien (9) est pourvu d'au moins un codage (25), par exemple sous la forme d'une bague d'encodage, et que le codage (25) est balayé avec au moins un capteur (26) en vue de la détection ou de la détermination de la position angulaire du contenant ou d'au moins une caractéristique de configuration (2.1) du contenant (2).

4. Procédé selon l'une quelconque des revendications précédentes, **caractérisé en ce que** la détection ou la détermination de la position angulaire du contenant (2) concerné ou de la caractéristique de configuration (2.1) du contenant (2) est effectuée avant le transfert de la préforme (3) de préférence préchauffée à un moule de soufflage (6) de la machine de moulage par soufflage (4) ou après le transfert au moule de soufflage (6).

5. Procédé selon l'une quelconque des revendications précédentes, **caractérisé en ce que** la détection ou la détermination de la position angulaire du contenant (2) concerné ou de la caractéristique de configuration (2.1) est effectuée avant le préchauffage de la préforme (3).

6. Procédé selon l'une quelconque des revendications précédentes, **caractérisé en ce que** la localisation et/ou la position du moule de soufflage (6) et/ou d'une partie, formant la caractéristique de configuration (2.1), du moule de soufflage (6) sont détectées aux fins de l'obtention de deuxièmes données de position, par exemple aux fins de la correction des premières données de position et/ou de la commande effectuée avec ces dernières de l'au moins un poste de traitement.

7. Procédé selon l'une quelconque des revendications précédentes, **caractérisé en ce qu'**une orientation ou une orientation sommaire du contenant (2) concerné est effectuée en tenant compte des premières et/ou deuxièmes données de position au niveau de l'au moins un poste de traitement.

8. Procédé selon l'une quelconque des revendications précédentes, **caractérisé en ce qu'**une impression, de préférence une impression numérique, des contenants (2), est effectuée au niveau de l'au moins un poste de traitement qui suit, et ce en orientant les contenants (2) et/ou en initiant l'opération d'impression commandée par les premières et/ou deuxièmes données de position, de préférence en tournant les contenants (2) autour de leur axe de contenant pendant l'impression.

9. Procédé selon l'une quelconque des revendications précédentes, **caractérisé en ce que** le traitement de chaque contenant (2) est effectué au niveau de plusieurs postes de traitement, qui se situent dans le prolongement les uns des autres dans une direction de transport (A) des contenants à travers la ligne de traitement (16), dans lequel les postes de traitement sont prévus de préférence respectivement au niveau d'un élément de transport pouvant être entraîné en rotation, par exemple de différents modules de traitement (24.1 - 24.8) se suivant les uns les autres dans la direction de transport.

10. Procédé selon l'une quelconque des revendications précédentes, **caractérisé en ce qu'**un séchage ou un durcissement de l'au moins une couleur d'impression ou encre d'impression utilisée lors de l'impression ainsi que, de manière simultanée, une stérilisation des contenants (2) au moins dans une zone partielle avec un rayonnement d'énergie, par exemple respectivement avec un rayonnement UV, sont effectués au niveau d'au moins un poste de traitement.

11. Procédé selon l'une quelconque des revendications précédentes, **caractérisé en ce que** le traitement des contenants (2) est effectué directement après le moulage par étirage ou soufflage.
